Europäisches Patentamt

European Patent Office

Office européen des brevets

(19)

(11) Publication number: **0 366 352**
**A1**

# EUROPEAN PATENT APPLICATION

(12)

(21) Application number: **89310739.1**

(22) Date of filing: **19.10.89**

(51) Int. Cl.⁵: **G01N 21/55 , G01B 11/30**

(30) Priority: **25.10.88 IE 3229/88**

(43) Date of publication of application:
**02.05.90 Bulletin 90/18**

(84) Designated Contracting States:
**AT DE ES FR GB IT SE**

(71) Applicant: **BAUSCH & LOMB BERMUDA TECHNOLOGY LTD**
**Gibbons Building P.O. Box 1154**
**Hamilton 5(BM)**

(72) Inventor: **McBriety, Vincent**
**49 St. Fintan's Crescent**
**Sutton Dublin 13(IE)**
Inventor: **Lunney, James Gerard**
**73 Pine Valley Avenue Grange Road**
**Rathfarnham Dublin(IE)**

(74) Representative: **Allam, Peter Clerk et al**
**LLOYD WISE, TREGEAR & CO. Norman House 105-109 Strand**
**London WC2R 0AE(GB)**

(54) **Measuring surface quality of a lens.**

(57) There is provided a method for measuring the surface quality of a lens, which comprises the steps of directing a beam of substantially collimated electromagnetic radiation of a wavelength in the range 200nm to 2000nm onto the surface of the lens, and measuring the intensity of the specularly reflected light from the surface of the lens.

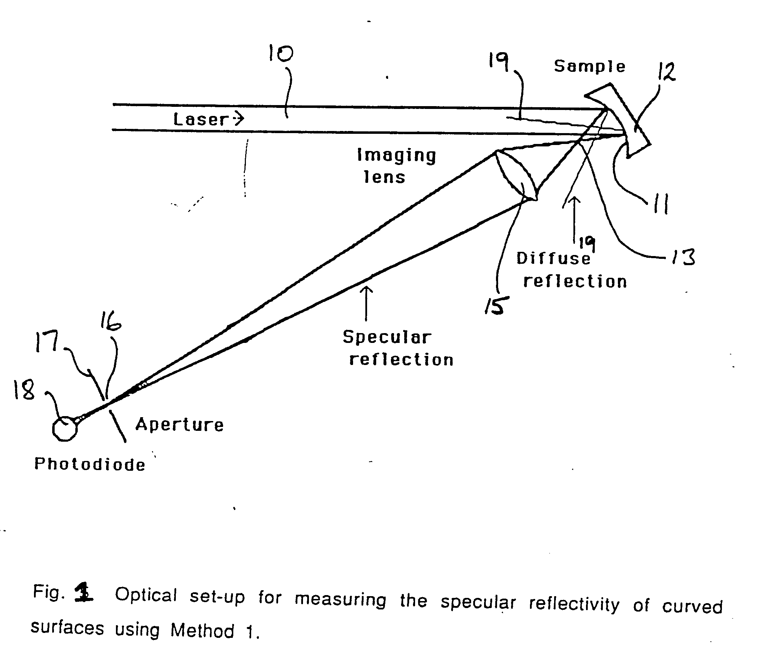

Fig. 1 Optical set-up for measuring the specular reflectivity of curved surfaces using Method 1.

Xerox Copy Centre

## MEASURING SURFACE QUALITY OF A LENS

The present invention relates to a method for measuring the surface quality (roughness or smoothness) of a lens, in particular, a contact lens.

Contact lenses are usually manufactured by lathing, to required dimensions, a piece of suitable material which generally includes a polymeric material, for example, polymethylmethacrylate (PMMA). Following the lathing operation, the contact lens is polished to smooth the lathed surface and remove any structure or roughness caused by lathing. It is highly desireable that the surface of the contact lens be as smooth as possible to provide optimum optical characteristics of the contact lens, in addition to providing acceptability of the lens on the eye of a user.

The lens surface may be manually polished (smoothed) using an abrasive or may by smoothed by laser irradiation as described in the Applicant's co-pending European Patent Application entitled "Laser Polishing of a Lens Surface" filed on the same date as the present Application, and the contents of which are incorporated herein by reference.

It is an object of the present invention to provide a method for readily providing a measure of the surface quality of a lens.

The average roughness of a rough surface can be obtained by measuring the variation, with angle of incidence, of the ratio of the specular reflectivities of the rough surface and a nominally smooth surface of the same material (see D.H. Hensler, Applied Optics(11), 2522, (1972)). If the roughness is assumed to have a Gaussian distribution (rms roughness $\sigma$) then this ratio, Rs, is given by

$$Rs = \frac{Is}{Iso} = \exp\left[-\left(\frac{4\pi\sigma\cos(\Omega)}{\lambda}\right)^2\right]$$

where Iso and Is are, respectively, the specular intensities reflected from polished and rough surfaces of the same material; $\lambda$ is the wavelength of the light; and $\Omega$ is the angle of incidence. The rms roughness is obtained by plotting $\ln(Rs)$ against $\cos^2(\Omega)$. The resulting straight line has a slope -- $(4\pi\sigma/\lambda)^2$.

According to the present invention there is provided a method for measuring the surface quality of a lens, comprising the steps of directing a beam of substantially collimated electromagnetic radiation of a wavelength in the range 200nm to 2000nm onto the surface of the lens, and measuring the intensity of the specularly reflected light from the surface of the lens.

In one embodiment of the invention the method is carried out during laser polishing of the lens by laser irradiation.

Preferably, the beam of electromagnetic radiation is a laser beam having a wavelength in the near ultra-violet, visible or near infra-red part of the electromagnetic spectrum.

More preferably, the electromagnetic radiation is a lower power He-Ne laser beam or semi-conductor diode laser beam.

The specularly reflected light is preferably detected using a photodetector.

Embodiments of the invention will now be described, by way of example, with reference to the accompanying drawings in which;

Figure 1 is a diagram illustrating one optical arrangement for carrying out the method according to the invention;

Figure 2 is an illustration of another optical arrangement for carrying out the method according to the invention; and

Figure 3 is a plot of photodetector output against position of the photodetector.

Referring now to Figure 1 there is shown one optical arrangement for measuring the surface quality of a contact lens. A substantially collimated visible He-Ne laser beam 10 is directed at the concave surface 11 of a lathed Contex contact lens sample 12, the surface quality of which is to be measured. The laser beam 10 strikes the surface 11 at a small angle of approximately 9° from the normal to the surface 11. It will be appreciated that in view of the cosine factor in the equation noted above, the smaller the angle of incidence the greater the sensitivity of the results.

The specularly reflected light is brought to a focus 13 in front of the lens surface 11. (Alternatively, if the incident laser beam 10 had been directed onto the convex surface 14 of the lens, the specularly reflected light would have formed a virtual focus behind the convex surface.).

A focusing lens 15 is used to form a magnified image of the focus point 13 (or of the virtual focus point) on a pinhole 16 in a member 17, and a photodiode 18 behind the member 17 measures the intensity of the light transmitted through the pinhole 16. A suitable filter (not shown) may be used to filter out background illumination of the photodiode.

The maximum signal output of the photodiode 18 is measured and noted by conventional means (not shown). The procedure is then repeated using a polished contact lens which is known to have a smooth surface and the maximum signal output of the photodiode 18 is again noted. The ratio of the photodetector output signals for polished and lathed contact lens is calculated and this value provides a measure of the quality (roughness or smoothness) of the lathed surface.

A portion of the incident light beam 10 is scattered from the surface 11 and forms a diffuse reflection 19 which is not received by the photodiode 18.

EXAMPLE:

The ratios of the maximum photodetector signals obtained on Boston IV and BL-70 polished and lathed half-lenses were 0.15 and 0.01 respectively. Visual examination showed that the Boston IV lens clearly had a smoother lathed surface than the BL-70 lens.

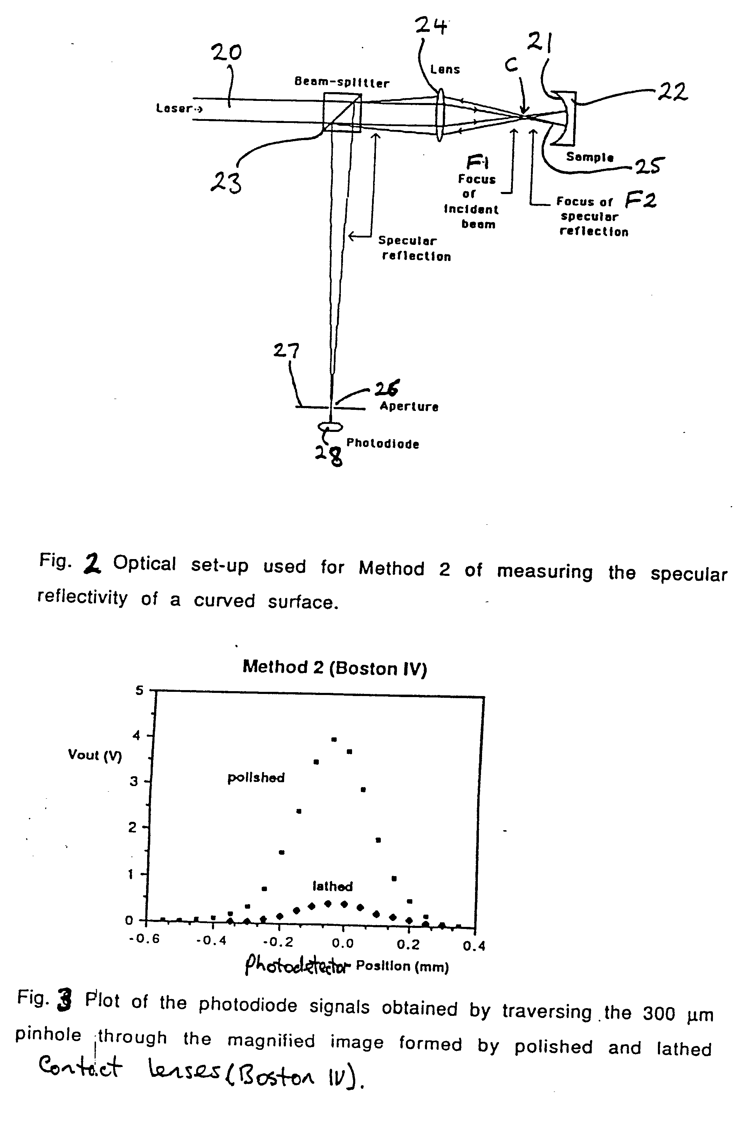

Figure 2 illustrates another optical arrangement for measuring the specular reflectivity (and thus the surface quality) of a contact lens. In this arrangement a substantially collinated He-Ne laser beam 20 is directed at the concave surface 21 of a lathed contact lens 22 the surface quality of which is to be measured. The laser beam 20 first passes through a beam splitter 23 and a focusing lens 24 brings the beam to a focus F1 in front of the centre of curvature C of the surface 21. The laser beam 20 then begins to diverge until it impinges upon the surface 21 of the contact lens 22. The specularly reflected light beam forms a focus F2 to the right hand side of the centre of curvature C - the same distance from the centre of curvature as the focus F1 of the incident beam.

The focus point F2 is magnified by the lens 24 which directs the reflected light onto the beam splitter 23 from where a portion of it is redirected through 90° and is focussed on an aperture 26 in a member 27. A photodiode 28 behind the member 27 measures the intensity of the light transmitted through the aperture 26. A suitable filter (not shown) may be used to filter out background illumination of the photodiode.

The maximum signal output of the photodiode 28 is measured and noted by conventional means (not shown). The procedure is then repeated using a polished contact lens which is knwon to have a smooth surface and the maximum signal output of the photodiode 28 is again noted. The ratio of the photodetector output signals for polished and lathed contact lens is calculated and this value provides a measure of the quality (roughness or smoothness) of the lathed surface.

The photodiode 28 and the aperture 26 (which is approximately 300 microns in diameter) are moved across the magnified image of F2 and the maximum signal output of the photodiode is noted.

The procedure is then repeated with a polished lens which is known to have a smooth surface and the maximum signal output of the photodiode 28 is again noted.

EXAMPLES:

Figure 3 is a plot of signals obtained by traversing the aperture 26 and photodiode through the magnified image of the focus F2 of the specularly reflected light for both a polished and a lathed Boston IV contact lens. The photodetector position noted as 0.0 corresponds with the centre of the aperture 26 in the member 27. The lower intensity signal is that of the lathed lens and the higher intensity signal is that of the polished lens. The relative signals obtained for the Boston IV lens was 0.11. Similar results were also obtained for a BL-70 and a Heflicon B lens these being 0.03 and 0.02 respectively. These values provide a quantitative measurement of the quality of the lathed lenses.

It will be appreciated that rather than traverse the aperture 26 through the image of the focus F2, a linear array of photodiodes could be used to determine the maximum intensity across the specularly reflected beam.

Moreover, if the incident laser beam is of a cross sectional area much less than the area of the lens, the laser beam may be arranged to raster scan the surface of the lens and if desireable a two-dimensional array of photodetectors can be used to determine the maximum intensity of the specularly reflected laser beam. In another embodiment of the invention, the lens could be moved to enable raster scanning by the laser beam or the lens could be rotated to cause the laser beam to trace out one or more circular path(s) on the lens surface.

While the laser light has been described as a visible light produced by a He-Ne laser, it may also comprise any light source in the visible or near infra-red region of the electromagnetic spectrum.

It will be appreciated that in both the arrangements of Figures 1 and 2, the surfaces of the lenses which are under investigation, may be simultaneously subject to laser irradiation to effect polishing of the lens surfaces, as described in the Applicant's aforementioned co-pending Patent Application. Thus, the present invention may in effect form an on-line monitor to determine when the lens surfaces have been optimally polished.

**Claims**

1. A method for measuring the surface quality of a lens, comprising the steps of directing a beam of substantially collimated electromagnetic radiation of a wavelength in the range 200nm to 2000nm onto the surface of the lens, and measuring the intensity of the specularly reflected light from the surface of the lens.

2. A method as claimed in Claim 1 wherein the beam of electromagnetic radiation is a laser beam having a wavelength in the near ultra-violet, visible or near infra-red part of the spectrum.

3. A method as claimed in Claim 1 or Claim 2, wherein the lens is simultaneously subject to laser irradiation to cause polishing of the lens surface.

9

Fig. 1 Optical set-up for measuring the specular reflectivity of curved surfaces using Method 1.

Fig. 2 Optical set-up used for Method 2 of measuring the specular reflectivity of a curved surface.

Fig. 3 Plot of the photodiode signals obtained by traversing the 300 μm pinhole through the magnified image formed by polished and lathed Contact lenses (Boston IV).

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | GB-A-2 022 823 (COMPAGNIE INDUSTRIELLE DES LASERS) * whole document * | 1,2 | G 01 N 21/55 G 01 B 11/30 |
| Y | | 3 | |
| X | US-A-3 771 880 (H. E. BENNETT) * abstract; column 3, line 54 - column 4, line 7; figure 2; claim 2 * | 1,2 | |
| Y | EP-A-0 087 793 (ACHTHAL-MASCHINENBAU GMBH) * whole document * | 3 | |
| A | US-A-4 624 573 (J. P. RAHN et al.) * abstract; column 1, lines 7-61; figure 1 * | 1-3 | |
| A | US-A-3 988 068 (R. A. SPRAGUE) * abstract; figure 1 * | 1,2 | |
| A | FR-A- 986 060 (F.C.E. POINTU) * whole document * | 1,3 | TECHNICAL FIELDS SEARCHED (Int. Cl.5) G 01 N G 01 B B 24 B |

The present search report has been drawn up for all claims

| Place of search | Date of completion of the search | Examiner |
|---|---|---|
| BERLIN | 22-12-1989 | JOHNSON K M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                  

& : member of the same patent family, corresponding document

EPO FORM 1503 03.82 (P0401)